# EUROPÄISCHE PATENTSCHRIFT

(11) **EP 1 981 925 B1**
(45) Veröffentlichungstag und Bekanntmachung des Hinweises auf die Patenterteilung: **02.08.2017**
(21) Anmeldenummer: 07712088.9
(22) Anmeldetag: 24.01.2007
(51) Int. Cl.: C08G 18/28, C08G 18/38, C09J 175/04

(54) **FEUCHTIGKEITSHÄRTENDE ZUSAMMENSETZUNGEN ENTHALTEND SILANFUNKTIONELLE POLYMERE UND AMINOSILAN-ADDUKTE MIT GUTER HAFTUNG**
HUMIDITY CURING COMPOSITIONS WITH GOOD ADHESION CONTAINING SILANE FUNCTIONAL POLYMERS AND AMINO SILANE ADDUCTS WITH GOOD ADHESION
COMPOSITIONS DURCISSANT À L'HUMIDITÉ AYANT UNE FORTE ADHÉSION CONTENANT DES POLYMÈRES AUX FONCTIONS SILANE ET PRODUITS D'ADDITION D'AMINOSILANES

(30) Priorität: 26.01.2006 EP 06100911
(43) Veröffentlichungstag der Anmeldung: 22.10.2008
(73) Patentinhaber: Sika Technology AG, 6340 Baar (CH)
(72) Erfinder: JUCKER, Barbara, CH-8057 Zürich (CH); OERTLI, Marcel, CH-8049 Zürich (CH); BÜTIKOFER, Pierre-André, CH-8304 Wallisellen (CH); BURCKHARDT, Urs, CH-8049 Zürich (CH)
(74) Vertreter: Sika Patent Attorneys
(86) Internationale Anmeldenummer: PCT/EP2007/050700
(87) Internationale Veröffentlichungsnummer: WO 2007/085622

(56) Entgegenhaltungen:
- EP-A- 0 596 360
- WO-A-01/12693
- DE-A- 19 929 011
- US-B1- 6 265 517

## Beschreibung

### Technisches Gebiet

Die Erfindung betrifft feuchtigkeitshärtende, silanfunktionelle Polymere enthaltende Zusammensetzungen mit guten Haftungseigenschaften, geeignet als elastische Klebstoffe, Dichtstoffe oder Beschichtungen.

### Stand der Technik

Feuchtigkeitshärtende Zusammensetzungen auf der Basis von silanfunktionellen Polymeren sind bekannt und werden unter anderem als elastische Klebstoffe, Dichtstoffe und Beschichtungen eingesetzt. Sie sind frei von Isocyanatgruppen und stellen deshalb eine aus toxikologischer Sicht bevorzugte Alternative zu den Isocyanat-haltigen Polyurethansystemen dar.

Unter den silanfunktionellen Polymeren nehmen jene, welche als Endgruppen α-funktionelle Silangruppen tragen, eine Sonderstellung ein, insbesondere aufgrund ihrer hohen Reaktivität gegenüber Feuchtigkeit. Solche Polymere und Zusammensetzungen daraus wurden beispielsweise beschrieben in WO 03/018658 A1. Die beschriebenen Systeme weisen jedoch für die Anwendung als elastische Klebstoffe, Dichtstoffe oder Beschichtungen Schwächen auf, insbesondere bei der Lagerstabilität sowie, nach der Aushärtung, bei der Dehnbarkeit und der Haftung auf dem Substrat.

WO 03/014226 A1 beschreibt eine Methode, wie die Lagerstabilität solcher Zusammensetzungen durch Zusätze von hochreaktiven α-funktionellen Silanen als chemische Wasserfänger, beispielsweise Alkoxymethyltrialkoxysilanen oder Carbamatomethylalkoxysilanen, verbessert werden kann. DE 199 29 011 A1 offenbart Aminosilane enthaltende, über eine Silanpolykondensation vernetzende Polyurethanmassen, die eine verbesserte Lagerstabilität aufweisen. EP 1 529 813 A1 und WO 2005/003201 A2 beschreiben Wege, wie die mechanischen Eigenschaften, insbesondere die Dehnbarkeit, solcher Zusammensetzungen mittels Zusätzen von α-funktionellen Dialkoxysilanen, beziehungsweise von NCO-reaktiven α-funktionellen Silanen, verbessert werden können, ohne Einbussen bei der Härtungscharakteristik zu erleiden.

Insbesondere für die Anwendung als elastische Kleb- oder Dichtstoffe ist es von entscheidender Bedeutung, dass die Zusammensetzungen nach ihrer Aushärtung über eine gute Haftung zu einer möglichst breiten Palette von Substraten verfügen. Ein wesentlicher Nachteil der im Stand der Technik beschriebenen Systeme auf der Basis von silanfunktionellen Polymeren mit α-funktionellen Silangruppen liegt aber gerade darin, dass sie auf vielen Substraten zuwenig gut haften. Insbesondere geht die Haftung zwischen ausgehärteter Zusammensetzung und Substrat bei starker Belastung mit Feuchtigkeit, beispielsweise durch längeres Eintauchen in Wasser oder durch Warmdampfbehandlung (zum Beispiel bei 70 °C und 100% Luftfeuchtigkeit), oft irreversibel verloren.

### Darstellung der Erfindung

Aufgabe der vorliegenden Erfindung ist es daher, feuchtigkeitshärtende Zusammensetzungen auf der Basis von Polymeren mit α-funktionellen Silangruppen zur Verfügung zu stellen, welche verbesserte Haftungseigenschaften aufweisen und sich damit insbesondere für eine Anwendung als Klebstoffe, Dichtstoffe oder Beschichtungen, insbesondere als elastischer Kleb- oder Dichtstoff, eignen.

Überraschenderweise wurde gefunden, dass feuchtigkeitshärtende Zusammensetzungen gemäss Anspruch 1 diese Aufgaben lösen. Insbesondere bleibt die Haftung auf dem Substrat auch bei starker Belastung durch Feuchtigkeit, beispielsweise durch längeres Eintauchen in Wasser oder durch Warmdampfbehandlung (zum Beispiel bei 70 °C und 100% Luftfeuchtigkeit), erhalten.

Weiterhin wurde ein Verfahren des Verklebens oder Abdichtens gemäss Anspruch 20 oder 21 zur Verfügung gestellt, welche zu verklebten oder abgedichteten Artikeln gemäss Anspruch 23, 24 oder 25 führen.

Weitere Ausführungsformen sind Gegenstand der abhängigen Ansprüche.

### Wege zur Ausführung der Erfindung

Gegenstand der Erfindung sind feuchtigkeitshärtende Zusammensetzungen, umfassend
a) mindestens ein silanfunktionelles Polymer **P** mit mindestens zwei Endgruppen der Formel (I) 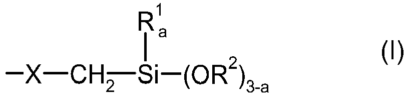 wobei
   R¹ für eine Alkylgruppe mit 1 bis 8 C-Atomen, insbesondere für eine Methyl- oder für eine Ethylgruppe, steht,
   R² für eine Alkylgruppe mit 1 bis 5 C-Atomen, insbesondere für eine Methylgruppe oder für eine Ethylgruppe oder für eine Isopropylgruppe, steht,
   a für 0, 1 oder 2 steht, und
   X für einen zweiwertigen Rest steht, welcher ausgewählt ist aus der Gruppe bestehend aus -NH-CO-N(R³)-, -NH-CO-S-, -NH-CO-O-, -O-CO-NH-, -N(R³)-CO-NH- und -S-CO-NH- ,
   und wobei R³ für ein Wasserstoffatom oder für einen linearen oder verzweigten Kohlenwasserstoffrest mit 1 bis 20 C-Atomen steht, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester,
b) mindestens ein Reaktionsprodukt **R**, hergestellt aus
   mindestens einem Aminosilan **AS** mit mindestens einer primären Aminogruppe, und
   mindestens einem Silangruppen-freien Alken **M**, welches befähigt ist, mit primären Aminogruppen 1,4-Additionsreaktionen einzugehen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im weiteren auch sogenannte Prepolymere, das heisst reaktive oligomere Voraddukte, deren funktionelle Gruppen am Aufbau von Makromolekülen beteiligt sind.

Mit dem Begriff "Silan" werden im vorliegenden Dokument Organoalkoxysilane bezeichnet, das heisst Verbindungen, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" die an den organischen Rest eines Organoalkoxysilans gebundene Silicium-haltige Gruppe. Die Silane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen). Der Begriff "silanfunktionell" bezeichnet Verbindungen, insbesondere Polymere, die Silangruppen aufweisen.

Als "α-funktionell" werden Silane oder Silangruppen bezeichnet, deren organischer Rest in α-Stellung (1-Stellung) zum Siliciumatom mit einer funktionellen Gruppe, beispielsweise einer Isocyanat-Gruppe oder einer AminoGruppe, substituiert ist. Entsprechend dazu werden Silane oder Silangruppen als "γ-funktionell" bezeichnet, wenn ihr organischer Rest in γ-Stellung (3-Stellung) zum Siliciumatom mit einer funktionellen Gruppe substituiert ist.

Silanbezeichnungen mit funktionellen Gruppen als Präfixen, wie beispielsweise "Aminosilan" oder "Isocyanatosilan", bezeichnen Silane, welche die genannte funktionelle Gruppe am organischen Rest als Substituenten tragen. Bezeichnungen wie beispielsweise "α-Aminosilan" oder "γ-Aminosilan" deuten an, dass eine genannte funktionelle Gruppe in spezifischer Stellung zum Silicumatom steht.

Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate oder Polycarbodiimide.

Der Begriff "Michael-Akzeptor" bezeichnet im vorliegenden Dokument Silangruppen-freie Alkene **M**, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise 1,4-Additionsreaktionen einzugehen (Hetero-Michael-Addition). Ein Michael-Akzeptor kann dabei monofunktionell oder polyfunktionell sein, das heisst eine oder mehrere solcher aktivierten Doppelbindungen enthalten und dementsprechend mit einer oder mehreren primären Aminogruppen 1,4-Additionsreaktionen eingehen.

Die feuchtigkeitshärtende Zusammensetzung enthält mindestens ein silanfunktionelles Polymer **P** mit Endgruppen der bereits genannten Formel (I).

Polymere in der Art von Polymer **P** sind beispielsweise in WO 03/018658 beschrieben. Diese Polymere enthalten als Endgruppen α-funktionelle Silangruppen, die aufgrund ihrer elektronischen Struktur die Eigenschaft haben, sehr schnell zu hydrolysieren und weiter zu kondensieren. Dadurch weisen solche Polymere eine sehr hohe Reaktivität gegenüber Feuchtigkeit auf. Sie können deshalb zur Herstellung von feuchtigkeitshärtenden Zusammensetzungen eingesetzt werden, die auch ohne oder mit nur geringen Mengen an Katalysatoren, insbesondere Metallkatalysatoren, hohe Aushärtungsgeschwindigkeiten aufweisen. Insbesondere werden auch mit solchen Polymeren **P**, welche als Endgruppen Di- oder Monoalkoxysilangruppen aufweisen, in feuchtigkeitshärtenden Zusammensetzungen noch genügend hohe Aushärtungsgeschwindigkeiten erhalten, was mit Polymeren, welche entsprechende γ-funktionelle Silangruppen aufweisen, nicht oder nur bei Verwendung unerwünscht hoher Katalysatormengen möglich ist.

Die Polymere **P** tragen bevorzugt Dialkoxysilangruppen, das heisst dass a in Formel (I) bevorzugt 1 ist. Derartige Polymere **P** enthaltende Zusammensetzungen haben den Vorteil, dass sie nach der Aushärtung über besonders gute mechanische Eigenschaften verfügen. Im Vergleich zur Verwendung der Trialkoxysilan-Gruppen tragenden Polymere **P** entsteht bei der Aushärtung des Polymers eine geringere Vernetzungsdichte. Dadurch weisen Zusammensetzungen enthaltend Polymere **P** mit Dialkoxysilangruppen eine speziell hohe Elastizität nach der Aushärtung auf, insbesondere eine speziell hohe Dehnbarkeit bei hoher Reissfestigkeit. Dies ist insbesondere für die Anwendung als elastische Klebstoffe, Dichtstoffe und Beschichtungen vorteilhaft.

Als Polymere **P** werden in einer ersten Ausführungsform Polymere **P1** eingesetzt, bei welchen der zweiwertige Rest X in Formel (I) für -NH-CO-N(R³)-oder -NH-CO-S- oder -NH-CO-O- steht. Die Polymere **P1** sind erhältlich aus der Reaktion eines Isocyanatgruppen enthaltenden Polyurethanpolymers **P11** mit einem α-Amino-, einem α-Mercapto- oder einem α-Hydroxysilan, wobei das Silan im Verhältnis zu den Isocyanatgruppen des Polyurethanpolymers **P11** stöchiometrisch oder leicht überstöchiometrisch eingesetzt wird.

Als α-Aminosilane zur Umsetzung mit einem Isocyanatgruppen enthaltenden Polyurethanpolymer **P11** geeignet sind insbesondere α-Aminosilane mit einer primären Aminogruppe (NH₂-Gruppe), im folgenden auch "primäre α-Aminosilane" genannt, wie (Aminomethyl)trimethoxysilan, (Aminomethyl)-methyldimethoxysilan und (Aminomethyl)dimethylmethoxysilan; α-Aminosilane mit einer sekundären Aminogruppe (NH-Gruppe), im folgenden auch "sekundäre α-Aminosilane" genannt, beispielsweise Analoga der genannten primären α-Aminosilane, welche am Stickstoffatom einen Kohlenwasserstoffrest, beispielsweise eine Methyl-, Ethyl-, Butyl-, Cyclohexyl- oder Phenylgruppe, tragen, wie beispielsweise (N-Cyclohexylaminomethyl)trimethoxysilan, (N-Cyclohexylaminomethyl)methyldimethoxysilan, (N-Phenylaminomethyl)trimethoxysilan und (N-Phenylaminomethyl)methyldimethoxysilan; mehrfach silanfunktionelle sekundäre α-Aminosilane wie beispielsweise Bis(trimethoxy-silylmethyl)amin; sowie die Produkte aus der Michael-artigen Addition der genannten primären α-Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie die Analoga aller genannten α-Aminosilane mit Ethoxy- oder Isopropoxygruppen anstelle der Methoxygruppen am Siliciumatom.

Von den genannten Produkten aus einer Michael-artigen Addition sollen insbesondere die Umsetzungsprodukte aus primären α-Aminosilanen mit Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder -dibutylester, Acrylnitril, 2-Pentennitril, Fumaronitril oder β-Nitrostyrol erwähnt werden.

Als α-Mercaptosilane zur Umsetzung mit einem Isocyanatgruppen enthaltenden Polyurethanpolymer **P11** geeignet sind beispielsweise (Mercaptomethyl)trimethoxysilan, (Mercaptomethyl)methyldimethoxysilan und (Mercaptomethyl)dimethylmethoxysilan, sowie die Analoga der genannten α-Mercaptosilane mit Ethoxy- oder Isopropoxygruppen anstelle der Methoxygruppen am Siliciumatom.

Als α-Hydroxysilane zur Umsetzung mit einem Isocyanatgruppen enthaltenden Polyurethanpolymer **P11** geeignet sind beispielsweise (Hydroxymethyl)-trimethoxysilan, (Hydroxymethyl)methyldimethoxysilan und (Hydroxymethyl)-dimethylmethoxysilan, sowie die Analoga der genannten α-Hydroxysilane mit Ethoxy- oder Isopropoxygruppen anstelle der Methoxygruppen am Siliciumatom.

Das Isocyanatgruppen enthaltende Polyurethanpolymer **P11** ist beispielsweise erhältlich durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Als Polyole für die Herstellung eines Isocyanatgruppen enthaltenden Polyurethanpolymers **P11** können beispielsweise die folgenden handelsüblichen Polyole, oder beliebige Mischungen davon, eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol und Polyethylenglykole, die isomeren Dipropylenglykole, Tripropylenglykole und Polypropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.
Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel Mₙ.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen-oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.

Diese genannten Polyole weisen ein mittleres Molekulargewicht von 250 - 30'000 g/mol, insbesondere von 1'000 - 30'000 g/mol, und eine mittlere OH-Funktionalität im Bereich von 1.6 bis 3 auf.

Als Polyole bevorzugt sind Polyoxyalkylenpolyole. Als Polyole weiterhin bevorzugt sind Diole. Besonders bevorzugt sind Polyoxyalkylendiole, insbesondere solche mit einem Ungesättigtheitsgrad tiefer als 0.02 mEq/g und einem Molekulargewicht im Bereich von 4'000 - 30'000 g/mol, insbesondere 8'000 - 30'000 g/mol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P11** mitverwendet werden.

Als Polyisocyanate für die Herstellung eines Isocyanatgruppen enthaltenden Polyurethanpolymers **P11** können beispielsweise die folgenden handelsüblichen Polyisocyanate verwendet werden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Di-isocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Als Polymere **P** werden in einer zweiten Ausführungsform Polymere **P2** eingesetzt, bei welchen der zweiwertige Rest X in Formel (I) für -O-CO-NH-oder -N(R³)-CO-NH- oder -S-CO-NH- steht. Die Polymere **P2** sind erhältlich aus der Reaktion eines mindestens zwei gegenüber Isocyanaten reaktiven Gruppen aufweisenden Polymers **P21** mit mindestens einem α-Isocyanatosilan. Diese Umsetzung erfolgt entweder im stöchiometrischen Verhältnis zwischen Isocyanatgruppen und Isocyanat-reaktiven Gruppen, beispielsweise bei Temperaturen von 20 °C bis 100 °C, gegebenenfalls unter Mitverwendung von Katalysatoren, so dass keine Isocyanatgruppen mehr übrig bleiben; oder sie erfolgt mit einem leichten Überschuss an Isocyanatgruppen, wobei das nach der Umsetzung im Polymer verbleibende α-Isocyanatosilan weiter umgesetzt werden kann, beispielsweise mit einem Alkohol. Diese zweite Ausführungsform ist gegenüber der ersten Ausführungsform, welche Polymer **P1** einsetzt, bevorzugt, da die Polymere **P2** bei gleichem Molekulargewicht typischerweise eine tiefere Viskosität aufweisen als die Polymere **P1**, was für die erfindungsgemässe Anwendung vorteilhaft ist.

Als α-Isocyanatosilane geeignet sind beispielsweise (Isocyanatomethyl)trimethoxysilan, (Isocyanatomethyl)methyldimethoxysilan, (Isocyanatomethyl)dimethylmethoxysilan, sowie die Analoga der genannten α-Isocyanatosilane mit Ethoxygruppen oder Isopropoxygruppen anstelle der Methoxygruppen am Siliciumatom. Unter den α-Isocyanatosilanen bevorzugt sind die Dialkoxysilane, insbesondere (Isocyanatomethyl)methyldimethoxysilan und (Isocyanatomethyl)methyldiethoxysilan.

Als mindestens zwei gegenüber Isocyanaten reaktive Gruppen aufweisende Polymere **P21** geeignet sind beispielsweise die im Folgenden aufgezählten Verbindungen:
- Polyole mit einem Molekulargewicht von mindestens 2000 g/mol, wie sie bereits als zur Herstellung eines Polyurethanpolymers **P11** geeignet genannt wurden. Insbesondere geeignet sind Polyoxyalkylenpolyole. Bevorzugt sind Polyole mit einem Molekulargewicht von mindestens 4000 g/mol. Besonders geeignet sind Polyoxypropylendiole und -triole mit einem Ungesättigtheitsgrad tiefer als 0.02 mEq/g und mit einem Molekulargewicht im Bereich von 4'000 - 30'000 g/mol, insbesondere im Bereich von 8'000 - 30'000 g/mol.
- Polyamine mit einem Molekulargewicht von mindestens 2000 g/mol, welche mindestens zwei Aminogruppen aufweisen, wobei die Aminogruppen primär und/oder sekundär sein können, wie beispielsweise Polyoxyalkylen-Polyamine, wie sie beispielsweise unter dem Namen Jeffamine^{®} (von Huntsman Chemicals) erhältlich sind.
- Polyurethanpolymere mit endständigen Hydroxylgruppen, primären oder sekundären Aminogruppen oder Mercaptogruppen mit einem Molekulargewicht von mindestens 2000 g/mol, bevorzugt von mindestens 4000 g/mol.

Polyurethanpolymere mit endständigen Hydroxylgruppen sind beispielsweise erhältlich durch die Umsetzung von mindestens einem Polyol mit mindestens einem Polyisocyanat, wobei die OH-Gruppen im stöchiometrischen Überschuss vorhanden sind, so dass nach der Umsetzung endständige OH-Gruppen verbleiben. Als Polyole und als Polyisocyanate geeignet für diese Umsetzung sind dieselben handelsüblichen Polyole und Polyisocyanate, wie sie bereits als geeignet zur Herstellung von Isocyanatgruppen enthaltenden Polyurethanpolymeren **P11** aufgezählt wurden.

Als Polymere **P21** bevorzugt sind Polyoxyalkylenpolyole mit einem Molekulargewicht von mindestens 4000 g/mol. Besonders bevorzugt sind Polyoxypropylendiole und -triole, insbesondere Polyoxyalkylendiole, mit einem Ungesättigtheitsgrad tiefer als 0.02 mEq/g und mit einem Molekulargewicht im Bereich von 4'000 - 30'000 g/mol, insbesondere im Bereich von 8'000 - 30'000 g/mol. Die Verwendung dieser bevorzugten Polyole hat den Vorteil, dass einfach herzustellende Polymere **P2** mit einer besonders tiefen Viskosität entstehen, die Zusammensetzungen mit besonders guten mechanischen Eigenschaften ergeben.

In einer besonders bevorzugten Ausführungsform sind die Endgruppen des silanfunktionellen Polymers **P** Dialkoxysilangruppen, das heisst, der Wert von a in Formel (I) ist 1, und das silanfunktionelle Polymer **P** ist ein Polymer **P2**, welches erhältlich ist aus der Umsetzung eines α-Isocyanatodialkoxysilans und eines Polymers **P21**, welches ein Polyalkoxyalkylendiol, insbesondere mit einem Ungesättigtheitsgrad von tiefer als 0.02 mEq/g und einem Molekulargewicht zwischen 4'000 und 30'000 g/mol, insbesondere zwischen 8'000 und 30'000 g/mol, ist.

Die feuchtigkeitshärtende Zusammensetzung enthält neben dem Polymer **P** mit α-funktionellen Silangruppen mindestens ein Reaktionsprodukt **R**, hergestellt aus mindestens einem Aminosilan **AS** mit mindestens einer primären Aminogruppe und mindestens einem Silangruppen-freien Alken **M**, welches befähigt ist, mit primären Aminogruppen 1,4-Additionsreaktionen einzugehen und im folgenden als Michael-Akzeptor bezeichnet wird.

Für die Herstellung eines Reaktionsprodukts **R** geeignete Aminosilane **AS** mit mindestens einer primären Aminogruppe sind Verbindungen der Formel (II), 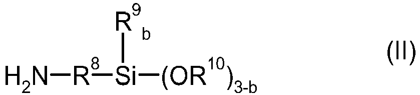 wobei
R⁸ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, insbesondere Ether-Sauerstoff oder sekundärem Amin-Stickstoff, steht,
R⁹ für eine Alkylgruppe mit 1 bis 8 C-Atomen, bevorzugt für eine Methyl- oder für eine Ethylgruppe, insbesondere eine Methylgruppe, steht,
R¹⁰ für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
b für 0, 1 oder 2, bevorzugt für 0 oder 1, steht.

Für die Herstellung eines Reaktionsprodukts **R** insbesondere geeignete Aminosilane **AS** sind die folgenden handelsüblichen Aminosilane:
3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, sowie deren Analoga mit Ethoxy- oder Isopropoxygruppen anstelle der Methoxygruppen am Silicium.

Insbesondere geeignete Aminosilane **AS** sind weiterhin sogenannte Diaminosilane, als Aminosilane, welche neben einer primären Aminogruppe eine sekundäre Aminogruppe (NH-Gruppe) tragen, welche insbesondere in γ-Stellung zum Siliciumatom steht. Beispiele für solche Diaminosilane sind N-(2-Aminoethyl)-3-aminopropyl-silane wie N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan.

Das Aminosilan **AS** ist bevorzugt ausgewählt aus der Gruppe bestehend aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan und N-(2-Aminoethyl)-3-aminopropyl-triethoxysilan, insbesondere aus der Gruppe bestehend aus N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan.

Für die Herstellung eines Reaktionsprodukts **R** geeignete Michael-Akzeptoren sind monofunktionell oder polyfunktionell. Geeignete monofunktionelle Michael-Akzeptoren sind Verbindungen der Formel (III) oder (IV), 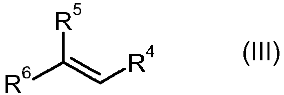 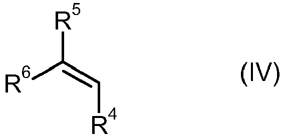 wobei
R⁴ für ein Wasserstoffatom oder für einen Rest aus der Gruppe bestehend aus -R⁷, -COOR⁷ und -CN steht, und
R⁵ für einen Rest aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷ steht, und
R⁶ für ein Wasserstoffatom oder für einen Rest aus der Gruppe bestehend aus -CH₃, -R⁷, -COOR⁷ und -CH₂COOR⁷ steht,
wobei
R⁷ für einen einwertigen Kohlenwasserstoffrest mit 1 bis 20 C-Atomen, welcher gegebenenfalls Heteroatome, insbesondere Ether-Sauerstoffatome, enthält, steht.

Beispiele für geeignete monofunktionelle Michael-Akzeptoren sind Malein- oder Fumarsäurediester wie Dimethylmaleinat, Diethylmaleinat, Dibutylmaleinat, Diethylfumarat; Citraconsäurediester wie Dimethylcitraconat; Acryl- oder Methacrylsäureester wie Methyl(meth)acrylat, Ethyl(meth)acrylat, Butyl(meth)acrylat, Lauryl(meth)acrylat, Stearyl(meth)acrylat, Tetrahydrofuryl-(meth)acrylat, Isobornyl(meth)acrylat; Acryl- oder Methacrylsäureamide wie (Meth)acrylamid, Methyl(meth)acrylamid, Butyl(meth)acrylamid, Dimethyl(meth)acrylamid, Dibutyl(meth)acrylamid; Itaconsäurediester wie Dimethylitaconat; Zimtsäureester wie Methylcinnamat; Vinylphosphonsäurediester wie Vinylphosphonsäuredimethylester; Vinylsulfonsäureester, insbesondere Vinylsulfonsäurearylester; Vinylsulfone; Vinylnitrile wie Acrylnitril, Crotonitril, 2-Pentennitril oder Fumaronitril; 1-Nitroethylene wie β-Nitrostyrol; und Knoevenagel-Kondensationsprodukte, wie beispielsweise solche aus Malonsäurediestern und Aldehyden wie Formaldehyd, Acetaldehyd oder Benzaldehyd. Insbesondere geeignet sind Maleinsäurediester, (Meth)acrylsäureester, (Meth)acrylsäureamide, Phosphonsäurediester und Vinylnitrile.

Bevorzugte monofunktionelle Michael-Akzeptoren sind Maleinsäuredimethyl-, -diethyl- und -dibutylester, (Meth)acrylsäuretetrahydrofurfuryl-, -isobornyl-, -hexyl-, -lauryl-, -stearyl-, 2-hydroxyethyl-und 3-hydroxypropylester, (Meth)acrylamid, N-Methyl(meth)acrylamid, N,N-Dimethyl(meth)acrylamid, Phosphonsäuredimethyl-, -diethyl- und -dibutylester, Acrylnitril, 2-Pentennitril, Fumaronitril und ß-Nitrostyrol, sowie Mischungen aus diesen Verbindungen.

Geeignete polyfunktionelle Michael-Akzeptoren sind insbesondere Verbindungen mit zwei oder mehr Acryl-, Methacryl- oder Acrylamidgruppen, wie beispielsweise zwei- oder mehrwertige Acrylate und Methacrylate von aliphatischen Polyethern, Polyestern, Novolaken, Phenolen, aliphatischen oder cycloaliphatischen Alkoholen, Glykolen und Polyesterglykolen sowie mono-und polyalkoxylierten Derivaten der vorgenannten Verbindungen, beispielsweise Ethylenglykol-di(meth)acrylat, Tetraethylenglykol-di(meth)acrylat, Tripropylenglykol-di(meth)acrylat, Polyethylenglykol-di(meth)acrylat, Polypropylenglykol-di(meth)acrylat, 1,4-Butandiol-di(meth)acrylat, 1,6-Hexandiol-di(meth)acrylat, Neopentylglykol-di(meth)acrylat, Trimethylolpropan-tri(meth)-acrylat, Pentaerithritol-tetra(meth)acrylat, Dipentaerithritol-tetra(meth)acrylat, Dipentaerithritol-penta(meth)acrylat, Dipentaerithritol-hexa(meth)acrylat; zwei-oder mehrwertige Acryl- oder Methacryl-funktionelle Polybutadiene, Polyisoprene oder Block-copolymere davon; Addukte aus zwei- oder mehrwertigen Epoxiden mit Acryl- und Methacrylsäure; zwei- oder mehrwertige Polyurethan(meth)acrylate; Tris-(2-hydroxyethyl)-isocyanurat-di(meth)acrylat, Tris-(2-hydroxyethyl)-isocyanurat-tri(meth)acrylat, Tris-(2-hydroxyethyl)-cyanurat-tri(meth)acrylat, N,N',N"-Tris-(meth)acryloyl-perhydrotriazin; zwei- oder mehrwertige (Meth)acrylamide wie N,N'-Methylen-bis-(meth)acrylamid, 1,4-Bis-(meth)acryloylpiperazin und N,N'-Bis-(meth)acryloyl-1,6-hexandiamin. Weitere geeignete polyfunktionelle Michael-Akzeptoren sind Divinylsulfon, sowie Mischpolyester aus Glykolen, Dicarbonsäuren oder ihren Estern oder Anhydriden, und Acryl- oder Methacrylsäure oder deren Ester, wie beispielsweise die von der Firma Toagosei unter dem Handelsnamen Aronix^{®} erhältlichen Polyesteracrylate der Typenreihen M-6000, M-7000, M-8000 und M-9000.

Bevorzugte polyfunktionelle Michael-Akzeptoren sind Ethylenglykol-di(meth)acrylat, Tetraethylenglykol-di(meth)acrylat, Tripropylenglykol-di(meth)acrylat, Polyethylenglykol-di(meth)acrylat, Polypropylenglykol-di(meth)acrylat, 1,4-Butandiol-di(meth)acrylat, 1,6-Hexandiol-di(meth)acrylat, Neopentylglykol-di(meth)acrylat, Trimethylolpropan-tri(meth)acrylat, Pentaerithritol-tetra(meth)acrylat, Dipentaerithritol-tetra(meth)acrylat, Dipentaerithritol-penta(meth)acrylat, Dipentaerithritol-hexa(meth)acrylat, sowie Mischpolyester aus Glykolen, Dicarbonsäuren oder ihren Estern oder Anhydriden, und Acryl-oder Methacrylsäure oder deren Ester, wie beispielsweise die von der Firma Toagosei unter dem Handelsnamen Aronix^{®} erhältlichen Polyesteracrylate der Typenreihen M-6000, M-7000, M-8000 und M-9000, insbesondere die Acrylate dieser Verbindungen, sowie Mischungen aus diesen Verbindungen.

Als Michael-Akzeptoren bevorzugt sind weiterhin Gemische aus den genannten bevorzugten monofunktionellen und den genannten bevorzugten polyfunktionellen Michael-Akzeptoren.

Das Reaktionsprodukt **R** stellt ein Additionsprodukt aus einem Aminosilan **AS** und einem Michael-Akzeptor dar. Für den Fall, dass der Michael-Akzeptor monofunktionell ist, weist das Reaktionsprodukt die Formel (V) auf, 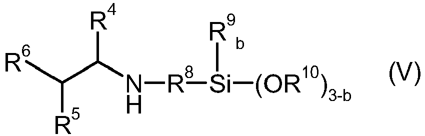 wobei R⁸, R⁹, R¹⁰, R⁴, R⁵, R⁶ und b die bereits beschriebenen Bedeutungen aufweisen.

Für den Fall, dass der Michael-Akzeptor polyfunktionell ist, stellt das Reaktionsprodukt **R** eine Verbindung dar, welche eine oder mehrere über eine sekundäre Aminogruppe gebundenen Silangruppen enthält. Je nach Stöchiometrie und Umsatz der Reaktion kann dieses Reaktionsprodukt **R** auch noch aktivierte Doppelbindungen enthalten.

Die Umsetzung zwischen dem Aminosilan **AS** und dem Michael-Akzeptor zum Reaktionsprodukt **R** erfolgt unter bekannten Bedingungen, wie sie für Reaktionen zwischen primären Aminen und aktivierten Alkenen typischerweise verwendet werden, beispielsweise bei 20 bis 150°C, insbesondere bei 20 bis 100 °C. Die Umsetzung erfolgt unter Verwendung eines Lösemittels oder bevorzugt lösemittelfrei. Gegebenenfalls können Hilffstoffe, insbesondere Katalysatoren oder Stabilisatoren, mitverwendet werden.

Die Stöchiometrie zwischen dem Aminosilan **AS** und dem Michael-Akzeptor ist frei wählbar; das heisst, dass das molare Verhältnis zwischen den primären Aminogruppen des Aminosilans **AS** und den aktivierten Doppelbindungen des Michael-Akzeptors nicht genau stöchiometrisch sein muss. Ein unterstöchiometrisches Verhältnis impliziert dabei, dass bei polyfunktionellen Michael-Akzeptoren auch Reaktionsprodukte **R** entstehen, in denen die aktivierten Doppelbindungen nur partiell umgesetzt sind. Bevorzugt wird ein stöchiometrisches oder ein leicht überstöchiometrisches Verhältnis, das heisst ein leichter Ueberschuss an Aminogruppen, verwendet.

Die feuchtigkeitshärtende Zusammensetzung umfassend mindestens ein silanfunktionelles Polymer **P** und mindestens ein Reaktionsprodukt **R** kann auch in einem Einstufenverfahren ("in situ") hergestellt werden. Dies bedeutet, dass das Reaktionsprodukt **R** nicht separat aus dem Aminosilan **AS** und dem Michael-Akzeptor hergestellt und dann mit dem Polymer **P** vermischt wird, sondern dass das Reaktionsprodukt **R** während oder nach dem gemeinsamen Mischen von Polymer **P**, Aminosilan **AS** und Michael-Akzeptor, jeweils im geeigneten Verhältnis zueinander, entsteht.

Die Anwesenheit mindestens eines Reaktionsprodukts **R** bewirkt eine deutliche Verbesserung der Haftungseigenschaften der ausgehärteten Zusammensetzung, insbesondere nach starker Belastung durch Feuchtigkeit, beispielsweise durch längeres Eintauchen in Wasser oder durch Warmdampfbehandlung (beispielsweise bei 70 °C und 100% Luftfeuchtigkeit). Es wurde gefunden, dass dies insbesondere dadurch erreicht wird, dass das Reaktionsprodukt **R** im Bereich von 0.1 - 10 Gewichts-%, bevorzugt 0.3 - 5 Gewichts-%, bezogen auf die gesamte Zusammensetzung, eingesetzt wird. Das Reaktionsprodukt **R** wird vorteilhaft in einer Menge von 0.2 - 10 Gewichts-% in Bezug auf das silanfunktionelle Polymer **P** eingesetzt.

Die beobachtete haftungsverbessernde Wirkung der Reaktionsprodukte **R** im Zusammenhang mit Polymeren **P** enthaltend α-funktionelle Silangruppen ist überraschend und nicht naheliegend.

Die erfindungsgemässe feuchtigkeitshärtende Zusammensetzung kann zusätzlich zu mindestens einem silanfunktionellen Polymer **P** und mindestens einem Reaktionsprodukt **R** weitere Komponenten enthalten. Es ist jedoch vorteilhaft, darauf zu achten, dass sie die Lagerstabilität nicht beeinträchtigen, das heisst, dass sie während der Lagerung die zur Vernetzung führende Reaktion der in der Zusammensetzung enthaltenen Silangruppen nicht in signifikantem Ausmass auslösen. Insbesondere bedeutet dies, dass solche weiteren Komponenten bevorzugt kein oder höchstens Spuren von Wasser enthalten. Als zusätzliche Komponenten können unter anderem die folgenden Hilfs- und Zusatzmittel vorhanden sein:
Weichmacher, beispielsweise Ester organischer Carbonsäuren oder deren Anhydride, wie Phthalate, beispielsweise Dioctylphthalat oder Diisodecylphthalat, Adipate, beispielsweise Dioctyladipat, und Sebacate, Polyole, beispielsweise Polyoxyalkylenpolyole oder Polyesterpolyole, organische Phosphor- und Sulfonsäureester oder Polybutene; Lösemittel; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe (im Folgenden als "Russ" bezeichnet), Kaoline, Aluminiumoxide, Kieselsäuren, insbesondere hochdisperse Kieselsäuren aus Pyrolyseprozessen, PVC-Pulver oder Hohlkugeln; Fasern, beispielsweise aus Polyethylen; Pigmente; Katalysatoren, beispielsweise Organozinnverbindungen wie Dibutylzinndilaurat und Dibutylzinndiacetylacetonat, Bismut-organische Verbindungen oder Bismut-Komplexe, aminogruppenhaltige Verbindungen, beispielsweise 1,4-Diazabicyclo[2.2.2]octan und 2,2'-Dimorpholinodiethylether, sowie Aminosilane, insbesondere die erwähnten Aminosilane **AS** sowie sekundäre Aminosilane wie beispielsweise N-Methyl-3-aminopropyl-trimethoxysilan, N-Methyl-3-aminopropyl-dimethoxymethylsilan, N-Ethyl-3-amino-2-methylpropyl-trimethoxysilan, N-Ethyl-3-amino-2-methylpropyl-dimethoxymethylsilan, N-Butyl-3-aminopropyl-trimethoxysilan, N-Butyl-3-aminopropyl-dimethoxymethylsilan, N-Butyl-4-amino-3,3-dimethylbutyl-trimethoxysilan, N-Butyl-4-amino-3,3-dimethylbutyl-dimethoxymethylsilan, N-Cyclohexyl-3-aminopropyl-trimethoxysilan, N-Cyclohexyl-3-aminopropyl-dimethoxymethylsilan, N-Phenyl-3-aminopropyl-trimethoxysilan, N-Cyclohexyl-aminomethyl-trimethoxysilan, N-Phenyl-aminomethyl-trimethoxysilan, N-Phenyl-aminomethyl-dimethoxymethylsilan; Rheologie-Modifizierer wie beispielsweise Verdickungsmittel, zum Beispiel Harnstoffverbindungen, Polyamidwachse, Bentonite oder pyrogene Kieselsäuren; weitere Haftvermittler, beispielsweise Epoxysilane, (Meth)acrylsilane, Anhydridosilane oder Addukte der vorgenannten Silane mit primären Aminosilanen, sowie Harnstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyl-dimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in feuchtigkeitshärtenden Zusammensetzungen üblicherweise eingesetzte Substanzen.

Bevorzugt enthält die feuchtigkeitshärtende Zusammensetzung Weichmacher, Füllstoffe und Katalysatoren. Als Füllstoffe bevorzugt sind Russe, Calciumcarbonate, insbesondere feinteilige beschichtete Calciumcarbonate, hochdisperse Kieselsäuren aus Pyrolyseprozessen, sowie Kombinationen aus diesen Füllstoffen. Bevorzugt enthält die Zusammensetzung zwischen 5 und 35 Gewichts-%, insbesondere zwischen 10 und 20 Gewichts-%, Russ.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Zusammensetzung enthält vorzugsweise keine freien Isocyanatgruppen. Eine derartige isocyanatfreie Zusammensetzung ist vom toxikologischen Standpunkt her vorteilhaft.

Bei der Applikation der beschriebenen feuchtigkeithärtenden Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Als Ergebnis dieser Reaktionen, welche durch den Einsatz von Katalysatoren beschleunigt werden können, härtet die Zusammensetzung schliesslich aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Zusammensetzung härtet bei Kontakt mit Feuchtigkeit schnell aus. Sie verfügt im ausgehärteten Zustand über eine hohe mechanische Festigkeit bei einer hohen Dehnbarkeit, sowie über gute Haftungseigenschaften, auch nach starker Belastung mit Feuchtigkeit. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen , welche eine hohe Aushärtungsgeschwindigkeit erfordern und hohe Anforderungen an die Festigkeit und die Früh- und Endfestigkeit sowie Dehnbarkeit stellen, bei gleichzeitig hohen Anforderungen an die Haftungseigenschaften. Speziell geeignet ist sie für Anwendungen, bei welchen eine Belastung der ausgehärteten Zusammensetzung mit Feuchtigkeit vorliegt, insbesondere mit einer Kombination aus Wärme und Feuchtigkeit.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Anstrich, Lack, Primer, Versiegelung oder Schutzbeschichtung, oder als Bodenbelag, beispielsweise für Büros, Wohnbereiche, Spitäler, Schulen, Lagerhallen und Parkgaragen.

In einer bevorzugten Ausführungsform wird die beschriebene Zusammensetzung als elastischer Klebstoff oder Dichtstoff eingesetzt.

Als elastischer Klebstoff weist die Zusammensetzung typischerweise eine Bruchdehnung von mindestens 200% und als elastischer Dichtstoff eine solche von mindestens 500% bei Raumtemperatur auf.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

Die Applikation des Kleb- oder Dichtstoffes erfolgt vorzugsweise gleichmässig.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk, insbesondere ein Bauwerk des Hoch- oder Tiefbaus, oder ein Transportmittel sein. Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte oder abgedichtete Artikel ein Transportmittel, insbesondere ein Automobil, oder ein Anbauteil eines Transportmittels, insbesondere eines Automobils.

Falls die Zusammensetzung als Klebstoff für elastische Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Elastische Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Es zeigte sich, dass die erfindungsgemässe Zusammensetzung enthaltend mindestens ein Polymer **P** und mindestens ein Reaktionsprodukt **R**, hergestellt aus mindestens einem Aminosilan **AS** mit mindestens einer primären Aminogruppe und mindestens einem monofunktionellen oder polyfunktionellen Michael-Akzeptor, überraschend gute Haftungseigenschaften aufweist. Im Vergleich mit einer Zusammensetzung ohne Reaktionsprodukt **R** weist sie insbesondere bessere Haftungseigenschaften nach einer starken Belastung der Klebefläche mit Feuchtigkeit, beispielsweise durch längeres Eintauchen in Wasser oder durch Warmdampfbehandlung (zum Beispiel 70 °C / 100% Luftfeuchtigkeit), auf.

### Beispiele

### Beschreibung der Prüfmethoden

Die **Zugfestigkeit** und die **Bruchdehnung** wurden bestimmt nach DIN EN 53504 (Zuggeschwindigkeit: 200 mm/min) an während 7 Tagen im Normklima (23±1 °C, 50±5% relative Luftfeuchtigkeit) ausgehärteten Filmen mit einer Schichtdicke von 2 mm.

Die **Zugscherfestigkeit** wurde gemessen in Anlehnung an DIN EN 1465. Es wurden Floatglasplättchen verwendet, welche mit Sika® Cleaner-205 (erhältlich bei Sika Schweiz AG) vorgängig gereinigt wurden. Die Glasplättchen wurden in der in der Norm beschriebenen Art angeordnet, sodass eine mit Klebstoff gefüllte Überlappung der Dimensionen 10 bis 12 mm Breite, 25 mm Länge und 4 bis 5 mm Dicke entstand. Zwecks Aushärtung wurde der Prüfling während 7 Tagen bei Normklima (23±1 °C, 50±5% relative Luftfeuchtigkeit) gelagert. Anschliessend wurde der Prüfling mit einer Querjochgeschwindigkeit von 20 mm/min bis zum Bruch auseinander gezogen.

Die **Haftungen** wurden folgendermassen bestimmt:
Zur Prüfung der Haftung wurden folgende Substrate in Form von Plättchen benutzt: Aluminium AlMg3, Glaskeramik VSG, Glaskeramik Bi-Basis ESG und Floatglas, erhältlich bei der Firma Rocholl, Schönbrunn, Deutschland. Jedes Plättchen wurde mit Sika^{®} Cleaner-205 gereinigt. Nach einer Ablüftzeit von 10 Minuten wurden zwei Raupen der jeweiligen Polyurethanzusammensetzung aus einer Kartusche auf jedes Plättchen aufgetragen. Das mit den Raupen beschichtete Plättchen wurde dann während 7 Tagen im Normklima (23±1 °C, 50±5% relative Luftfeuchtigkeit) gelagert, worauf die Haftung ein erstes Mal geprüft wurde (erste Raupe). Anschliessend wurde das Plättchen während 7 Tagen vollständig eingetaucht in Wasser bei Raumtemperatur gelagert, worauf die Haftung ein zweites Mal geprüft wurde (zweite Raupe). Zur Prüfung der Haftung wurde die ausgehärtete Raupe jeweils an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Bewertung der Hafteigenschaften erfolgte anhand dem nach dem Abziehen der Raupe auf der Substratoberfläche zurückbleibenden ausgehärteten Klebstoff (Kohäsionsbruch), und zwar durch Abschätzen des kohäsiven Anteils der Haftfläche, gemäss folgender Skala:
   1 = mehr als 95% Kohäsionsbruch
   2 = 75 - 95% Kohäsionsbruch
   3 = 25 - 75% Kohäsionsbruch
   4 = weniger als 25% Kohäsionsbruch
Testresultate mit Kohäsionsbruchwerten von weniger als 75%, also Werte von 3 und 4, gelten als ungenügend.

Die **OH-Zahl** des verwendeten Polyols wurde bestimmt durch die Umsetzung mit einem Ueberschuss Isophorondiisocyanat und anschliessender Rücktitration der unreagierten Isocyanatgruppen. Der Wert der OH-Zahl wurde dabei nicht um das im Polyol enthaltene Wasser korrigiert. Die Angabe der OH-Zahl erfolgt also inklusive Wasser.

**Verwendete Abkürzungen in der Tabelle 1**

| | |
|---|---|
| Vgl. | Vergleich |
| Dynasylan^{®} DAMO | N-(2-Aminoethyl)-3-aminopropyl-trimethoxysilan (Degussa) |

### a) Herstellung eines Polymers P mit α-funktionellen Silangruppen

### Polymer 1

Unter Feuchtigkeitsausschluss wurden 1000 g Polyol Acclaim^{®} 18200 (Bayer; low monol Polyoxypropylendiol, mittleres Molekulargewicht ca. 18'000 g/mol, OH-Zahl 7.34 mg KOH/g) und 21.1 g Geniosil^{®} XL 42 (Wacker; Isocyanatomethyl-methyldimethoxysilan) bei 90 °C umgesetzt, bis mittels FT-IR-Spektroskopie kein freies Isocyanat mehr nachgewiesen werden konnte. Das entstandene Polymer mit α-funktionellen Silangruppen wurde auf Raumtemperatur abgekühlt und unter Ausschluss von Feuchtigkeit aufbewahrt. Das klare, farblose Produkt hatte eine Viskosität von 40 Pas bei 20 °C.

### b) Herstellung von Reaktionsprodukten R

### Reaktionsprodukt 1

Zu 17.9 g (100 mmol) 3-Aminopropyl-trimethoxysilan (Silquest^{®} A-1110, GE Advanced Materials) wurden unter Feuchtigkeitsausschluss 17.2 g (100 mmol) Maleinsäure-diethylester unter gutem Rühren langsam zugetropft und anschliessend 2 Stunden weitergerührt. Es wurde eine farblose Flüssigkeit mit einer Viskosität bei 20 °C von 60 mPa·s erhalten.

### Reaktionsprodukt 2

Zu 17.9 g (100 mmol) 3-Aminopropyl-trimethoxysilan (Silquest^{®} A-1110, GE Advanced Materials) wurden unter Feuchtigkeitsausschluss 15.6 g (100 mmol) Tetrahydrofurfuryl-acrylat unter gutem Rühren langsam zugetropft und anschliessend 2 Stunden bei 60°C weitergerührt. Es wurde eine farblose Flüssigkeit mit einer Viskosität bei 20 °C von 270 mPa·s erhalten.

### Reaktionsprodukt 3

Zu 17.9 g (100 mmol) 3-Aminopropyl-trimethoxysilan (Silquest^{®} A-1110, GE Advanced Materials) wurden unter Feuchtigkeitsausschluss 13.6 g (100 mmol) frisch destillierter Vinylphosphonsäure-dimethylester unter gutem Rühren langsam zugetropft und anschliessend 2 Stunden bei 60°C weitergerührt. Es wurde eine farblose Flüssigkeit mit einer Viskosität bei 20 °C von 300 mPa·s erhalten.

### Reaktionsprodukt 4

Zu 22.2 g (100 mmol) N-(2-Aminoethyl)-3-aminopropyl-trimethoxysilan (Dynasylan^{®} DAMO, Degussa) wurden unter Feuchtigkeitsausschluss 5.3 g (100 mmol) Acrylnitril unter gutem Rühren langsam zugetropft und anschliessend 2 Stunden bei 60°C weitergerührt. Es wurde eine farblose Flüssigkeit mit einer Viskosität bei 20 °C von 30 mPa·s erhalten.

### Reaktionsprodukt 5

Zu 22.2 g (100 mmol) N-(2-Aminoethyl)-3-aminopropyl-trimethoxysilan (Dynasylan^{®} DAMO, Degussa) wurden unter Feuchtigkeitsausschluss 9.9 g (100 mmol) N,N-Dimethylacrylamid unter gutem Rühren und Wasserbadkühlung langsam zugetropft und anschliessend 2 Stunden bei 60°C weitergerührt. Es wurde eine farblose Flüssigkeit mit einer Viskosität bei 20 °C von 50 mPa·s erhalten.

### Reaktionsprodukt 6

Hergestellt in situ (bei der Herstellung von Beispiel 7) mit 56 Gewichts-% N-(2-Aminoethyl)-3-aminopropyl-trimethoxysilan (Dynasylan^{®} DAMO, Degussa) und 44 Gewichts-% Polyesteracrylat Aronix^{®} M-8060 (Toagosei, Japan).

### c) Herstellung von Klebstoffen

### Basisformulierung

In einem Vakuummischer wurden 3250 g Polymer 1, 1170 g Diisodecylphthalat (DIDP; Palatinol^{®} Z, BASF), 65 g N-(Methyl-dimethoxysilylmethyl)-O-methyl-carbamat (Geniosil^{®} XL 65, Wacker), 975 g feinteiliges beschichtetes Calciumcarbonat (Socal^{®} U1S2, Solvay, getrocknet), 975 g Russ (getrocknet) und 0.4 g Di-n-butyl-zinndilaurat zu einer homogenen Paste verarbeitet, welche unter Ausschluss von Feuchtigkeit aufbewahrt wurde.

### Beispiele 1 bis 7

In einem Vakuummischer wurde die Basisformulierung mit den in der Tabelle 1 für die Beispiele 1 bis 7 angegebenen Silane bei Raumtemperatur homogen vermischt und die so erhaltenen Klebstoffe unter Ausschluss von Feuchtigkeit in Kartuschen abgefüllt.

Von diesen Zusammensetzungen wurden am Folgetag, wie beschrieben, Prüfkörper angefertigt. Die Zusammensetzungen und Resultate dieser Proben nach der beschriebenen Aushärtung und Lagerung sind in Tabelle 1 zusammengestellt.

**Tabelle 1: Zusammensetzung und Prüfergebnisse der Klebstoffe der Beispiele 2 - 7 und des Vergleichsbeispiels 1. Mengenangaben sind in Gewichtsteilen.**

| **Beispiel** | **1** (Vgl.) | **2** | **3** | **4** | **5** | **6** | **7** |
|---|---|---|---|---|---|---|---|
| Basisformulierung | 98.0 | 98.0 | 98.0 | 98.0 | 98.0 | 98.0 | 98.0 |
| Dynasylan^{®} DAMO | 2.0 | - | - | - | - | - | - |
| Reaktionsprodukt 1 | - | 2.0 | - | - | - | - | - |
| Reaktionsprodukt 2 | - | - | 2.0 | - | - | - | - |
| Reaktionsprodukt 3 | - | - | - | 2.0 | - | - | - |
| Reaktionsprodukt 4 | - | - | - | - | 2.0 | - | - |
| Reaktionsprodukt 5 | - | - | - | - | - | 2.0 | - |
| Reaktionsprodukt 6 (in situ hergestellt) | - | - | - | - | - | - | 2.0 |

| **Ergebnisse der mechanischen Prüfungen:** | | | | | | | |
|---|---|---|---|---|---|---|---|
| Zugfestigkeit [MPa] | 6.9 | 7.4 | 7.2 | 7.2 | 7.1 | 7.5 | 7.4 |
| Bruchdehnung [%] | 710 | 910 | 870 | 900 | 810 | 850 | 880 |
| Zugscherfestigkeit [MPa] | 3.8 | 4.2 | 4.2 | 4.0 | 4.6 | 4.6 | 4.4 |

| **Ergebnisse der Haftprüfungen^{*}:** | | | | | | | |
|---|---|---|---|---|---|---|---|
| Aluminium AlMg3 | 1 4 | 1 2 | 1 2 | 1 1 | 1 1 | 1 1 | 1 1 |
| Glaskeramik VSG | 1 4 | 1 1 | 1 2 | 1 2 | 1 1 | 1 1 | 1 1 |
| Glaskeramik ESG | 2 4 | 1 4 | 2 4 | 1 4 | 1 1 | 1 1 | 1 1 |
| Floatglas | 1 4 | 1 2 | 1 1 | 1 2 | 1 1 | 1 1 | 1 1 |

| | | | | | | | |
|---|---|---|---|---|---|---|---|
| ^{*} 1. Zahl: nach 7 Tagen Lagerung im Normklima; 2. Zahl: nach 7 Tagen Lagerung im Normklima und weiteren 7 Tagen Wasserlagerung | | | | | | | |

Aus der Tabelle 1 ist ersichtlich, dass alle Klebstoffe im ausgehärteten Zustand sehr gute mechanische Eigenschaften aufweisen.

Der Klebstoff des Vergleichsbeispiels 1, welcher kein Reaktionsprodukt **R** enthält, weist auf allen geprüften Substraten nach 7 Tagen Lagerung im Normklima eine gute Haftung auf. Wird der Prüfkörper jedoch anschliessend für 7 Tage bei Raumtemperatur ins Wasser gelegt, so ist die Haftung nicht mehr gegeben.

Die erfindungsgemässen Klebstoffe der Beispiele 2 bis 7 zeigen eine deutliche Verbesserung der Haftung nach Wasserlagerung im Vergleich mit Beispiel 1.

## Patentansprüche

1. Feuchtigkeitshärtende Zusammensetzung umfassend
a) mindestens ein silanfunktionelles Polymer **P** mit mindestens zwei Endgruppen der Formel (I) 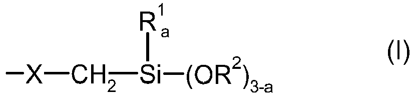 wobei
R¹ für eine Alkylgruppe mit 1 bis 8 C-Atomen, insbesondere für eine Methyl- oder für eine Ethylgruppe, steht;
R² für eine Alkylgruppe mit 1 bis 5 C-Atomen, insbesondere für eine Methylgruppe oder für eine Ethylgruppe oder für eine Isopropylgruppe, steht;
a für 0, 1 oder 2 steht, und
X für einen zweiwertigen Rest steht, welcher ausgewählt ist aus der Gruppe bestehend aus -NH-CO-N(R³)-, -NH-CO-S-, -NH-CO-O-, -O-CO-NH-, -N(R³)-CO-NH- und -S-CO-NH-,
wobei R³ für ein Wasserstoffatom oder für einen linearen oder verzweigten Kohlenwasserstoffrest mit 1 bis 20 C-Atomen steht, welcher gegebenenfalls cyclische Anteile aufweist, und welcher gegebenenfalls mindestens eine funktionelle Gruppe aufweist, welche ausgewählt ist aus der Gruppe bestehend aus Alkoxysilyl, Ether, Sulfon, Nitril, Nitro, Carbonsäureester, Sulfonsäureester und Phosphonsäureester;
b) mindestens ein Reaktionsprodukt **R**, hergestellt aus
mindestens einem Aminosilan **AS** mit mindestens einer primären Aminogruppe, und
mindestens einem silangruppen-freien Alken **M**, welches befähigt ist, mit primären Aminogruppen 1,4-Additionsreaktionen einzugehen.

2. Feuchtigkeitshärtende Zusammensetzung gemäss Anspruch 1, **dadurch gekennzeichnet, dass** das Aminosilan **AS** die Formel (II) aufweist 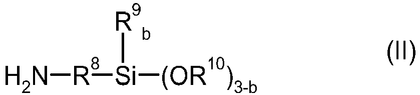 wobei
R⁸ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, insbesondere Ether-Sauerstoff oder sekundärem Amin-Stickstoff, steht,
R⁹ für eine Alkylgruppe mit 1 bis 8 C-Atomen, bevorzugt für eine Methyl- oder für eine Ethylgruppe, insbesondere eine Methylgruppe, steht,
R¹⁰ für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
b für 0, 1 oder 2, bevorzugt für 0 oder 1, steht.

3. Feuchtigkeitshärtende Zusammensetzung gemäss Anspruch 2, **dadurch gekennzeichnet, dass** das Aminosilan **AS** ausgewählt ist aus der Gruppe bestehend aus 3-Aminopropyltrimethoxysilan, 3-Aminopropyltriethoxysilan, N-(2-Aminoethyl)-3-aminopropyl-trimethoxysilan, N-(2-Aminoethyl)-3-aminopropyl-methyldimethoxysilan, N-(2-Aminoethyl)-3-aminopropyltriethoxysilan und N-(2-Aminoethyl)-3-aminopropyl-triisopropoxysilan, insbesondere aus der Gruppe bestehend aus N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan.

4. Feuchtigkeitshärtende Zusammensetzung gemäss einem der Ansprüche 1 bis 3, **dadurch gekennzeichnet, dass** das silangruppen-freie Alken **M** ein Michael-Akzeptor ist und die Formel (III) oder (IV) aufweist, 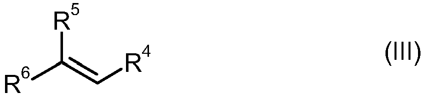 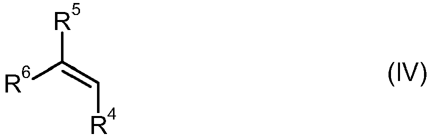 wobei
R⁴ für ein Wasserstoffatom oder für einen Rest aus der Gruppe bestehend aus -R⁷, -COOR⁷ und -CN steht, und
R⁵ für einen Rest aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷ steht, und
R⁶ für ein Wasserstoffatom oder für einen Rest aus der Gruppe bestehend aus -CH₃, -R⁷, -COOR⁷ und -CH₂COOR⁷ steht,
wobei R⁷ für einen einwertigen Kohlenwasserstoffrest mit 1 bis 20 C-Atomen, welcher gegebenenfalls Heteroatome, insbesondere Ether-Sauerstoffatome, enthält, steht.

5. Feuchtigkeitshärtende Zusammensetzung gemäss einem der Ansprüche 1 bis 3, **dadurch gekennzeichnet, dass** das silangruppen-freie Alken **M** ein Michael-Akzeptor ist und zwei oder mehrere funktionelle Gruppen aufweist, welche mit primären Aminogruppen 1,4-Additionsreaktionen eingehen können.

6. Feuchtigkeitshärtende Zusammensetzung gemäss Anspruch 5, **dadurch gekennzeichnet, dass** das silangruppen-freie Alken **M** ein Michael-Akzeptor ist und zwei oder mehrere Acryl-, Methacryl- oder Acrylamidgruppen aufweist.

7. Feuchtigkeitshärtende Zusammensetzung gemäss einem der vorhergehenden Ansprüche, **dadurch gekennzeichnet, dass** a = 1 ist.

8. Feuchtigkeitshärtende Zusammensetzung gemäss einem der vorhergehenden Ansprüche, **dadurch gekennzeichnet, dass** das silanfunktionelle Polymer **P** ein silanfunktionelles Polymer **P1** ist, bei welchem X in Formel (I) für -NH-CO-N(R³)- oder -NH-CO-S- oder -NH-CO-O- steht, und welches erhältlich ist aus der Reaktion eines Isocyanatgruppen enthaltenden Polyurethanpolymers **P11**, wie es durch die Umsetzung von mindestens einem Polyisocyanat mit mindestens einem Polyol erhalten wird, mit einem α-Amino-, einem α-Mercapto- oder einem α-Hydroxysilan, wobei das Silan im Verhältnis zu den Isocyanatgruppen des Polyurethanpolymers **P11** stöchiometrisch oder leicht überstöchiometrisch eingesetzt wird.

9. Feuchtigkeitshärtende Zusammensetzung gemäss einem der Ansprüche 1 bis 7, **dadurch gekennzeichnet, dass** das silanfunktionelle Polymer **P** ein silanfunktionelles Polymer **P2** ist, bei welchem X in Formel (I) für -O-CO-NH- oder -N(R³)-CO-NH- oder -S-CO-NH- steht, und welches erhältlich ist aus der Reaktion eines mindestens zwei gegenüber Isocyanaten reaktiven Gruppen aufweisenden Polymers **P21** mit mindestens einem α-Isocyanatosilan.

10. Feuchtigkeitshärtende Zusammensetzung gemäss Anspruch 9, **dadurch gekennzeichnet, dass** das mindestens zwei gegenüber Isocyanaten reaktiven Gruppen aufweisende Polymer **P21** ein Polyol, insbesondere ein Polyoxyalkylenpolyol, bevorzugt mit einem Ungesättigtheitsgrad von tiefer als 0.02 mEq/g und einem Molekulargewicht zwischen 4'000 und 30'000 g/mol, insbesondere zwischen 8'000 und 30'000 g/mol, ist.

11. Feuchtigkeitshärtende Zusammensetzung gemäss Anspruch 9 oder 10, **dadurch gekennzeichnet, dass** das α-Isocyanatosilan (Isocyanatomethyl)-methyldimethoxysilan oder (Isocyanatomethyl)methyldiethoxysilan ist.

12. Feuchtigkeitshärtende Zusammensetzung gemäss einem der Ansprüche 1 bis 7, **dadurch gekennzeichnet, dass** a = 1 ist und dass das silanfunktionelle Polymer **P** ein silanfunktionelles Polymer **P2** ist, welches hergestellt wird aus der Reaktion eines α-Isocyanatodialkoxysilans mit einem Polyalkoxyalkylendiol **P21**, insbesondere mit einem Ungesättigtheitsgrad von tiefer als 0.02 mEq/g und einem Molekulargewicht zwischen 4'000 und 30'000 g/mol, insbesondere zwischen 8'000 und 30'000 g/mol.

13. Feuchtigkeitshärtende Zusammensetzung gemäss einem der vorhergehenden Ansprüche, **dadurch gekennzeichnet, dass** der Anteil des Reaktionsproduktes **R** an der Zusammensetzung 0.1 bis 10 Gewichts-%, insbesondere 0.3 bis 5 Gewichts-%, ist.

14. Feuchtigkeitshärtende Zusammensetzung gemäss einem der vorhergehenden Ansprüche, **dadurch gekennzeichnet, dass** der das Reaktionsprodukt **R** in einer Menge von 0.2 - 10 Gewichts-% in Bezug auf das silanfunktionelle Polymer **P** eingesetzt wird.

15. Feuchtigkeitshärtende Zusammensetzung gemäss einem der vorhergehenden Ansprüche, **dadurch gekennzeichnet, dass** das Reaktionsprodukt **R** in situ aus dem Aminosilan **AS** und dem silangruppen-freien Alken **M** hergestellt wird.

16. Feuchtigkeitshärtende Zusammensetzung gemäss einem der vorhergehenden Ansprüche, **dadurch gekennzeichnet, dass** die Zusammensetzung zusätzlich mindestens einen Weichmacher und/oder mindestens einen Füllstoff, insbesondere Russ, und/oder mindestens einen Katalysator für die Reaktionen der Silangruppen enthält.

17. Verwendung einer feuchtigkeitshärtenden Zusammensetzung gemäss einem der Ansprüche 1 bis 16 als Klebstoff, Dichtstoff oder als Beschichtung, insbesondere als elastischer Kleb- oder Dichtstoff.

18. Verwendung gemäss Anspruch 17 für das Verkleben von Bauteilen im Hoch- oder Tiefbau und bei der Fertigung oder Reparatur von industriellen Gütern oder Konsumgütern, insbesondere von Transportmitteln.

19. Verwendung gemäss Anspruch 17 für das Abdichten von Fugen, Nähten oder Hohlräumen in der industriellen Fertigung oder Reparatur, oder im Hoch- oder Tiefbau.

20. Verfahren der Verklebung von Substraten **S1** und **S2** umfassend die Schritte
- Applikation einer Zusammensetzung gemäss einem der Ansprüche 1 bis 16 auf ein Substrat **S1** und/oder ein Substrat **S2**,
- Kontaktieren der Substrate **S1** und **S2** über die applizierte Zusammensetzung,
- Aushärtung der Zusammensetzung durch Kontakt mit Feuchtigkeit,
wobei die Substrate **S1** und **S2** gleich oder verschieden voneinander sind.

21. Verfahren des Abdichtens umfassend die Schritte
- Applikation einer Zusammensetzung gemäss einem der Ansprüche 1 bis 16 zwischen ein Substrat **S1** und ein Substrat **S2**,
- Aushärtung der Zusammensetzung durch Kontakt mit Feuchtigkeit,
wobei die Substrate **S1** und **S2** gleich oder verschieden voneinander sind.

22. Verfahren gemäss Anspruch 20 oder 21, **dadurch gekennzeichnet, dass** mindestens eines der Substrate **S1** oder **S2** Glas, Glaskeramik, Beton, Mörtel, Backstein, Ziegel, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, eine Farbe oder ein Lack, insbesondere ein Automobillack, ist.

23. Verklebter Artikel, welcher mittels eines Verfahrens zur Verklebung gemäss Anspruch 20 oder 22 hergestellt wird.

24. Abgedichteter Artikel, welcher mittels eines Verfahrens zur Abdichtung gemäss einem der Ansprüche 21 oder 22 hergestellt wird.

25. Verklebter oder abgedichteter Artikel gemäss Anspruch 23 oder 24, **dadurch gekennzeichnet, dass** der Artikel ein Bauwerk, ein Industriegut oder ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

## Claims

1. A moisture-curing composition comprising
a) at least one silane-functional polymer **P** having at least two end groups of the formula (I) 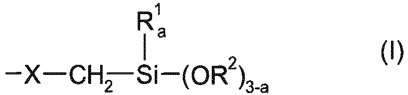 where
R¹ is an alkyl group having 1 to 8 C atoms, more particularly a methyl group or an ethyl group;
R² is an alkyl group having 1 to 5 C atoms, more particularly a methyl group or an ethyl group or an isopropyl group;
a is 0, 1 or 2; and
X is a divalent radical selected from the group consisting of -NH-CO-N(R³)-, -NH-CO-S-, -NH-CO-O-, -O-CO-NH-, -N(R³)-CO-NH-, and -S-CO-NH-,
where R³ is a hydrogen atom or is a linear or branched hydrocarbon radical having 1 to 20 C atoms which optionally contains cyclic fractions and which optionally has at least one functional group selected from the group consisting of alkoxysilyl, ether, sulfone, nitrile, nitro, carboxylic ester, sulfonic ester, and phosphonic ester;
b) at least one reaction product **R** prepared from
at least one aminosilane **AS** having at least one primary amino group, and
at least one silane-group-free alkene **M** which is capable of undergoing 1,4-addition reactions with primary amino groups.

2. The moisture-curing composition of claim 1, **characterized in that** the aminosilane **AS** has the formula (II) 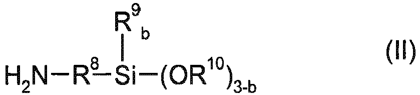 where
R⁸ is a linear or branched, optionally cyclic, alkylene group having 1 to 20 C atoms, optionally with aromatic fractions, and optionally with heteroatoms, more particularly ether oxygen or secondary amine nitrogen,
R⁹ is an alkyl group having 1 to 8 C atoms, preferably a methyl group or an ethyl group, more particularly a methyl group,
R¹⁰ is an alkyl group having 1 to 5 C atoms, preferably a methyl group or an ethyl group or an isopropyl group, more particularly a methyl group or an ethyl group,
b is 0, 1 or 2, preferably 0 or 1.

3. The moisture-curing composition of claim 2, **characterized in that** the aminosilane **AS** is selected from the group consisting of 3-aminopropyltrimethoxysilane, 3-aminopropyltriethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, and N-(2-aminoethyl)-3-aminopropyltriisopropoxysilane, more particularly from the group consisting of N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, and N-(2-aminoethyl)-3-aminopropyltriisopropoxysilane.

4. The moisture-curing composition of any one of claims 1 to 3, **characterized in that** the silane-group-free alkene **M** is a Michael acceptor and has the formula (III) or (IV) 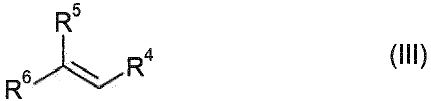 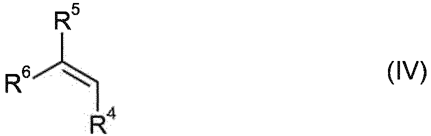 where
R⁴ is a hydrogen atom or is a radical from the group consisting of -R⁷, -COOR⁷, and -CN, and
R⁵ is a radical from the group consisting of -COOR⁷, -CONH₂, -CONHR⁷, -CONR⁷₂, -CN, -NO₂, -PO(OR⁷)₂, -SO₂R⁷, and -SO₂OR⁷, and
R⁶ is a hydrogen atom or is a radical from the group consisting of -CH₃, -R⁷, -COOR⁷, and -CH₂COOR⁷,
where R⁷ is a monovalent hydrocarbon radical having 1 to 20 C atoms which optionally contains heteroatoms, more particularly ether oxygen atoms.

5. The moisture-curing composition of any one of claims 1 to 3, **characterized in that** the silane-group-free alkane **M** is a Michael acceptor and contains two or more functional groups which are able to undergo 1,4-addition reactions with primary amino groups.

6. The moisture-curing composition of claim 5, **characterized in that** the silane-group-free alkene **M** is a Michael acceptor and contains two or more acryloyl, methacryloyl or acrylamide groups.

7. The moisture-curing composition of any one of the preceding claims, **characterized in that** a is 1.

8. The moisture-curing composition of any one of the preceding claims, **characterized in that** the silane-functional polymer **P** is a silane-functional polymer **P1** for which X in formula (I) is -NH-CO-N(R³)- or -NH-CO-S- or -NH-CO-O-, and which is obtainable from the reaction of a polyurethane polymer **P11** which contains isocyanate groups, such as is obtained through the reaction of at least one polyisocyanate with at least one polyol, with an α-aminosilane, an α-mercaptosilane or an α-hydroxysilane, the silane being used stoichiometrically or slightly superstoichiometrically in relation to the isocyanate groups of the polyurethane polymer **P11.**

9. The moisture-curing composition of any one of claims 1 to 7, **characterized in that** the silane-functional polymer **P** is a silane-functional polymer **P2** for which X in formula (I) is -O-CO-NH- or -N(R³)-CO-NH- or -S-CO-NH-, and which is obtainable from the reaction of a polymer **P21** containing at least two isocyanate-reactive groups with at least one α-isocyanatosilane.

10. The moisture-curing composition of claim 9, **characterized in that** the polymer **P21** containing at least two isocyanate-reactive groups is a polyol, more particularly a polyoxyalkylene polyol, preferably having a degree of unsaturation of less than 0.02 meq/g and a molecular weight of between 4 000 and 30 000 g/mol, more particularly between 8 000 and 30 000 g/mol.

11. The moisture-curing composition of claim 9 or 10, **characterized in that** the α-isocyanatosilane is (isocyanatomethyl)methyldimethoxysilane or (isocyanatomethyl)methyldiethoxysilane.

12. The moisture-curing composition of any one of claims 1 to 7, **characterized in that** a is 1 and **in that** the silane-functional polymer **P** is a silane-functional polymer **P2** which is prepared from the reaction of an α-isocyanatodialkoxysilane with a polyoxyalkylenediol **P21**, more particularly having a degree of unsaturation of less than 0.02 meq/g and a molecular weight of between 4 000 and 30 000 g/mol, more particularly between 8 000 and 30 000 g/mol.

13. The moisture-curing composition of any one of the preceding claims, **characterized in that** the fraction of the reaction product **R** in the composition is 0.1% to 10% by weight, more particularly 0.3% to 5% by weight.

14. The moisture-curing composition of any one of the preceding claims, **characterized in that** the reaction product **R** is used in an amount of 0.2% - 10% by weight in relation to the silane-functional polymer **P.**

15. The moisture-curing composition of any one of the preceding claims, **characterized in that** the reaction product **R** is prepared in situ from the aminosilane **AS** and the silane-group-free alkene **M.**

16. The moisture-curing composition of any one of the preceding claims, **characterized in that** the composition further comprises at least one plasticizer and/or at least one filler, more particularly carbon black and/or at least one catalyst for the reactions of the silane groups.

17. The use of a moisture-curing composition of any one of claims 1 to 16 as an adhesive, sealant or coating, more particularly as an elastic adhesive or sealant.

18. The use of claim 17 for the adhesive bonding of components in construction or civil engineering and in the manufacture or repair of industrial goods or consumer goods, more particularly of means of transport.

19. The use of claim 17 for the sealing of joints, seams or cavities in industrial manufacture or repair, or in construction or civil engineering.

20. A method of adhesively bonding substrates **S1** and **S2**, comprising the steps of
- applying a composition of any one of claims 1 to 16 to a substrate **S1** and/or a substrate **S2**,
- contacting the substrates **S1** and **S2** via the applied composition,
- curing the composition by contact with moisture,
the substrates **S1** and **S2** being alike or different from one another.

21. A method of sealing, comprising the steps of
- applying a composition of any one of claims 1 to 16 between a substrate **S1** and a substrate **S2**,
- curing the composition by contact with moisture,
the substrates **S1** and **S2** being alike or different from one another.

22. The method of claim 20 or 21, **characterized in that** at least one of the substrates **S1** or **S2** is glass, glass ceramic, concrete, mortar, brick, tile, plaster, a natural stone such as granite or marble; a metal or an alloy such as aluminum, steel, nonferrous metal, galvanized metal; a wood, a plastic such as PVC, polycarbonate, PMMA, polyester, epoxy resin; a powder coating, a paint or a finish, more particularly an automobile finish.

23. An adhesively bonded article produced by means of a method of adhesive bonding of claim 20 or 22.

24. A sealed article produced by means of a method of sealing of either of claims 21 and 22.

25. The adhesively bonded or sealed article of claim 23 or 24, **characterized in that** the article is a built structure, an industrial product or a means of transport, more particularly a water or land vehicle, preferably an automobile, a bus, a truck, a train or a boat, or a part thereof.

## Revendications

1. Composition durcissant à l'humidité, comprenant :
a) au moins un polymère à fonction silane P contenant au moins deux groupes terminaux de formule (I) 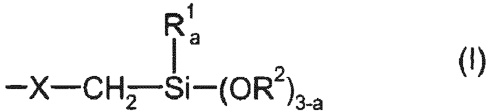 dans laquelle
R¹ représente un groupe alkyle de 1 à 8 atomes C, notamment un groupe méthyle ou éthyle ;
R² représente un groupe alkyle de 1 à 5 atomes C, notamment un groupe méthyle ou un groupe éthyle ou un groupe isopropyle ;
a représente 0, 1 ou 2, et
X représente un radical bivalent, qui est choisi dans le groupe constitué par -NH-CO-N(R³)-, -NH-CO-S-, - NH-CO-O-, -O-CO-NH-, -N(R³)-CO-NH et -S-CO-NH-,
R³ représentant un atome d'hydrogène ou un radical hydrocarboné linéaire ou ramifié de 1 à 20 atomes C, qui comprend éventuellement des fractions cycliques, et qui comprend éventuellement au moins un groupe fonctionnel, qui est choisi dans le groupe constitué par alcoxysilyle, éther, sulfone, nitrile, nitro, ester d'acide carboxylique, ester d'acide sulfonique et ester d'acide phosphonique ;
b) au moins un produit de réaction R, fabriqué à partir de
au moins un aminosilane AS contenant au moins un groupe amino primaire et
au moins un alcène exempt de groupes silane M, qui est apte à réaliser des réactions d'addition 1,4 avec des groupes amino primaires.

2. Composition durcissant à l'humidité selon la revendication 1, **caractérisée en ce que** l'aminosilane AS présente la formule (II) 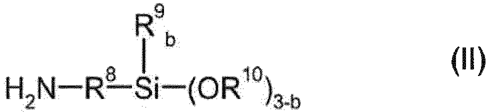 dans laquelle
R⁸ représente un groupe alkylène linéaire ou ramifié, éventuellement cyclique, de 1 à 20 atomes C, comprenant éventuellement des fractions aromatiques, et comprenant éventuellement des hétéroatomes, notamment un oxygène d'éther ou un azote d'amine secondaire,
R⁹ représente un groupe alkyle de 1 à 8 atomes C, de préférence un groupe méthyle ou éthyle, notamment un groupe méthyle,
R¹⁰ représente un groupe alkyle de 1 à 5 atomes C, de préférence un groupe méthyle ou un groupe éthyle ou un groupe isopropyle, notamment un groupe méthyle ou un groupe éthyle,
b représente 0, 1 ou 2, de préférence 0 ou 1.

3. Composition durcissant à l'humidité selon la revendication 2, **caractérisée en ce que** l'aminosilane AS est choisi dans le groupe constitué par le 3-aminopropyltriméthoxysilane, le 3-aminopropyltriéthoxysilane, le N-(2-aminoéthyl)-3-aminopropyl-triméthoxysilane, le N-(2-aminoéthyl)-3-aminopropyl-méthyldiméthoxysilane, le N-(2-aminoéthyl)-3-aminopropyl-triéthoxysilane et le N-(2-aminoéthyl)-3-aminopropyl-triisopropoxysilane, notamment dans le groupe constitué par le N-(2-aminoéthyl)-3-aminopropyl-triméthoxysilane, le N-(2-aminoéthyl)-3-aminopropyl-méthyldiméthoxysilane, le N-(2-aminoéthyl)-3-aminopropyl-triéthoxysilane et le N-(2-amino-éthyl)-3-aminopropyl-triisopropoxysilane.

4. Composition durcissant à l'humidité selon l'une quelconque des revendications 1 à 3, **caractérisée en ce que** l'alcène exempt de groupes silane M est un accepteur de Michael et présente la formule (III) ou (IV) 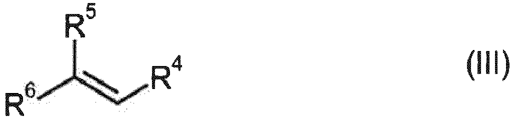 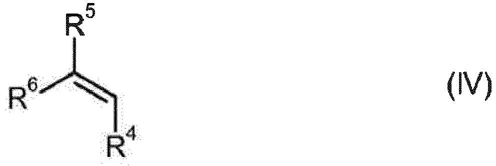 dans lesquelles
R⁴ représente un atome d'hydrogène ou un radical du groupe constitué par -R⁷, -COOR⁷ et -CN, et
R⁵ représente un radical du groupe constitué par-COOR⁷, -CONH₂, -CONHR⁷, -CONR⁷₂, -CN, -NO₂, -PO(OR⁷)₂,-SO₂R⁷ et -SO₂OR⁷,
et
R⁶ représente un atome d'hydrogène ou un radical du groupe constitué par -CH₃, -R⁷, -COOR⁷ et -CH₂COOR⁷,
R⁷ représentant un radical hydrocarboné monovalent de 1 à 20 atomes C, qui contient éventuellement des hétéroatomes, notamment des atomes d'oxygène d'éther.

5. Composition durcissant à l'humidité selon l'une quelconque des revendications 1 à 3, **caractérisée en ce que** l'alcène exempt de groupes silane M est un accepteur de Michael et comprend deux groupes fonctionnels ou plus, qui peuvent réaliser des réactions d'addition 1,4 avec des groupes amino primaires.

6. Composition durcissant à l'humidité selon la revendication 5, **caractérisée en ce que** l'alcène exempt de groupes silane M est un accepteur de Michael et comprend deux groupes acryle, méthacryle ou acrylamide ou davantage.

7. Composition durcissant à l'humidité selon l'une quelconque des revendications précédentes, **caractérisée en ce que** a = 1.

8. Composition durcissant à l'humidité selon l'une quelconque des revendications précédentes, **caractérisée en ce que** le polymère à foncton silane P est un polymère à fonction silane P1 dans lequel X dans la formule (I) représente -NH-CO-N(R³)- ou -NH-CO-S- ou-NH-CO-O-, et qui peut être obtenu par la réaction d'un polymère de polyuréthane contenant des groupes isocyanate P11, tel qu'obtenu par la réaction d'au moins un polyisocyanate avec au moins un polyol, avec un α-amino-, un α-mercapto- ou un α-hydroxysilane, le silane étant utilisé en un rapport stoechiométrique ou légèrement sur-stoechiométrique par rapport aux groupes isocyanate du polymère de polyuréthane P11.

9. Composition durcissant à l'humidité selon l'une quelconque des revendications 1 à 7, **caractérisée en ce que** le polymère à fonction silane P est un polymère à fonction silane P2, dans lequel X dans la formule (I) représente -O-CO-NH- ou -N(R³)-CO-NH- ou -S-CO-NH-, et qui peut être obtenu par la réaction d'un polymère P21 comprenant au moins deux groupes réactifs avec les isocyanates avec au moins un α-isocyanatosilane.

10. Composition durcissant à l'humidité selon la revendication 9, **caractérisée en ce que** le polymère P21 comprenant au moins deux groupes réactifs avec les isocyanates est un polyol, notamment un polyoxyalkylène-polyol, de préférence ayant un degré d'insaturation de moins de 0,02 méq/g et un poids moléculaire compris entre 4 000 et 30 000 g/mol, notamment entre 8 000 et 30 000 g/mol.

11. Composition durcissant à l'humidité selon la revendication 9 ou 10, **caractérisée en ce que** l'α-isocyanatosilane est l'(isocyanatométhyl)-méthyldiméthoxysilane ou l'(isocyanatométhyl)méthyldiéthoxysilane.

12. Composition durcissant à l'humidité selon l'une quelconque des revendications 1 à 7, **caractérisée en ce que** a = 1 et **en ce que** le polymère à fonction silane P est un polymère à fonction silane P2, qui est fabriqué par la réaction d'un α-isocyanatodialcoxysilane avec un polyalcoxyalkylène-diol P21, notamment ayant un degré d'insaturation inférieur à 0,02 méq/g et un poids moléculaire compris entre 4 000 et 30 000 g/mol, notamment entre 8 000 et 30 000 g/mol.

13. Composition durcissant à l'humidité selon l'une quelconque des revendications précédentes, **caractérisée en ce que** la proportion du produit de réaction R dans la composition est de 0,1 à 10 % en poids, notamment de 0,3 à 5 % en poids.

14. Composition durcissant à l'humidité selon l'une quelconque des revendications précédentes, **caractérisée en ce que** le produit de réaction R est utilisé en une quantité de 0,2 à 10 % en poids, par rapport au polymère à fonction silane P.

15. Composition durcissant à l'humidité selon l'une quelconque des revendications précédentes, **caractérisée en ce que** le produit de réaction R est fabriqué in situ à partir de l'aminosilane AS et de l'alcène exempt de groupes silane M.

16. Composition durcissant à l'humidité selon l'une quelconque des revendications précédentes, **caractérisée en ce que** la composition contient en outre au moins un plastifiant et/ou au moins une charge, notamment du noir de carbone, et/ou au moins un catalyseur pour les réactions des groupes silane.

17. Utilisation d'une composition durcissant à l'humidité selon l'une quelconque des revendications 1 à 16 en tant qu'adhésif, agent d'étanchéité ou en tant que revêtement, notamment en tant qu'adhésif ou agent d'étanchéité élastique.

18. Utilisation selon la revendication 17 pour le collage de composants dans la construction en hauteur ou en profondeur, et lors de la fabrication ou de la répartion d'articles industriels ou d'articles de consommation, notamment de moyens de transport.

19. Utilisation selon la revendication 17 pour l'étanchéification de joints, de soudures ou de cavités dans la fabrication ou la réparation industrielle, ou dans la construction en hauteur ou en profondeur.

20. Procédé de collage de substrats S1 et S2, comprenant les étapes suivantes :
- l'application d'une composition selon l'une quelconque des revendications 1 à 16 sur un substrat S1 et/ou un substrat S2,
- la mise en contact des substrats S1 et S2 par le biais de la composition appliquée,
- le durcissement de la composition par contact avec de l'humidité,
les substrats S1 et S2 étant identiques ou différents l'un de l'autre.

21. Procédé d'étanchéification, comprenant les étapes suivantes :
- l'application d'une composition selon l'une quelconque des revendications 1 à 16 entre un subtrat S1 et un substrat S2,
- le durcissementt de la composition par contact avec de l'humidité,
les substrats S1 et S2 étant identiques ou différents l'un de l'autre.

22. Procédé selon la revendication 20 ou 21, **caractérisé en ce qu'** au moins un des substrat S1 ou S2 est du verre, de la vitrocéramique, du béton, du mortier, de la brique, de la tuile, du plâtre, une pierre naturelle telle que du granite ou du marbre ; un métal ou un alliage, tel que l'aluminium, l'acier, un métal non ferreux, un métal galvanisé; un bois, un plastique tel que le PVC, le polycarbonate, le PMMA, le polyester, la résine époxyde ; un revêtement en poudre, une peinture ou un vernis, notamment un vernis automobile.

23. Article collé, qui est fabriqué au moyen d'un procédé de collage selon la revendication 20 ou 22.

24. Article étanchéifié, qui est fabriqué au moyen d'un procédé d'étanchéification selon l'une quelconque des revendications 21 ou 22.

25. Article collé ou étanchéifié selon la revendication 23 ou 24, **caractérisé en ce que** l'article est un ouvrage, un article industriel ou un moyen de transport, notamment un véhicule sur l'eau ou sur terre, de préférence une automobile, un bus, un camion, un train ou un navire, ou une partie de ceux-ci.
